# EUROPEAN PATENT APPLICATION

(11) **EP 4 019 602 A1**
(43) Date of publication of application: **29.06.2022**
(21) Application number: 20217324.1
(22) Date of filing: 27.12.2020
(51) Int. Cl.: C09J 7/00, C09J 7/35, C09J 5/06

(54) **LOW TACK STRUCTURAL ADHESIVE FOR SHEAR BONDING OF MAGNETS IN ELECTRICAL MOTORS**

(71) Applicant: 3M Innovative Properties Company, Saint Paul, MN 55133-3427 (US)
(72) Inventor: Cura, Elisabeth, 40223 Düsseldorf (DE); Yavuz, Nurettin, 40223 Düsseldorf (DE); Sawicki, Jacek, 51-515 Wroclaw (PL); Niemiec, Micha, 50-422 Wroclaw (PL); Beuer, Christian, 40764 Langenfeld (DE)
(74) Representative: Hettstedt, Stephan

(57) **Abstract**

The present disclosure provides a structural adhesive film having a first major surface and a second major surface opposite the first major surface, wherein the structural adhesive film exhibits on the second major surface a lower coefficient of friction according to DIN EN ISO 8295 than on the first major surface, wherein the coefficient of friction according to DIN EN ISO 8295 of the second major surface is at least 15 % lower than the coefficient of friction according to DIN EN ISO 8295 of the first major surface of the structural adhesive film.

## Description

### Field

The disclosure relates to a structural adhesive film having different friction coefficients on its two major surfaces, which are suitable for bonding magnets, in particular into brackets or pouches. The present disclosure further relates to a bonded assembly comprising a magnet adhesively bonded with the structural adhesive film to or into a device. In another aspect, the present disclosure relates to a method for bonding magnets to or into a device. In still a further aspect, the present disclosure relates to the use of such structural adhesive films for adhesively bonding magnets.

### Background

Electrical motors and electrical power generators have found recently growing interest in research and development as well as in the industry in general. This is due to several reasons. First, there is an ever increasing need of electrical energy. Second, there is growing interest in so-called green energy generation, and this oftentimes comprises wind or water energy, i.e. the generation of electricity by means of large rotors or water-driven turbines. Third, and maybe most importantly, the need to move away from combustion engines to electrically-driven engines, in particular in the automotive sector. In all these cases, permanent magnets are needed, either in stators or rotors of power generators or engines.

The permanent magnets in most cases are not the rotors or stators themselves, rather, a number of permanent magnets are applied to or (more importantly) into the rotors or stators. Oftentimes, the permanent magnets are put into brackets or pouches. In order to increase the efficiency and/or efficacy of the power generator or the engine, either the number of permanent magnets must be increased, the strength of the permanent magnets must be increased, and/or the ratio of permanent magnets in the rotor or stator must be increased. All these factors are naturally limited. For instance, rotors or stators may be load-bearing and must exhibit a minimum of structural stability. Hence, the numbers and/or sizes of brackets or pouches for accepting permanent magnets in rotors or stators are limited. Therefore, there exists the need to minimize the gap between the permanent magnet and the pouch or bracket.

The permanent magnet needs be somehow secured permanently in the pouch or bracket of the rotor or stator. It is well-known to use adhesives for this purpose. Structural paste adhesives are oftentimes used as a well-proven measure yielding good results in securely fixing magnets in place. However, paste adhesives may be disadvantageous since they may be squeezed out of the gaps which would necessitate clean-up measures. Using adhesive films or tapes is already well-proven. With ever smaller gaps and at the same time ever stronger magnets, problems have been reported in that the films or tapes are either too thick for the gaps, or of films or tapes being sheared of or damaged during insertion of the magnet into the pouch or bracket.

Without contesting the technical advantages associated with the adhesive and systems disclosed in the art, there is still a need for a high performance adhesive which combines certain handling properties in uncured state as well as excellent bonding performance after curing, and which is easy to apply to magnets, and facilitates easy insertion of magnets into pouches or brackets.

### Summary

According to a first aspect, the present disclosure provides a structural adhesive film having a first major surface and a second major surface opposite the first major surface, wherein the structural adhesive film exhibits on the second major surface a lower coefficient of friction according to DIN EN ISO 8295 than on the first major surface, wherein the coefficient of friction according to DIN EN ISO 8295 of the second major surface is at least 15 % lower than the coefficient of friction according to DIN EN ISO 8295 of the first major surface of the structural adhesive film.

According to a second aspect, the present disclosure relates to a bonded assembly, comprising a magnet adhesively bonded to or into a device with the structural adhesive film as described herein.

In another aspect, the present disclosure provides method for bonding magnets into brackets of a device, the method comprising the following steps:
(I) Applying at least one structural adhesive films according to any one of the preceding claims to a at least one surface of a magnet such that the first major surface of the structural adhesive film is in contact with the at least one surface of the magnet and the second major surface of the structural adhesive film faces away from the at least one surface of the magnet;
(II) Inserting the magnet having the structural adhesive film on at least one of its surfaces into a bracket of a device such that the structural adhesive films is in contact with both at least one surface of the bracket of the device and the at least one surface of the magnet;
(III) Curing the structural adhesive film, thereby bonding the magnet to the bracket of the device.

In yet another aspect, the present disclosure relates to a use of the structural adhesive film of the present disclosure for adhesively bonding magnets.

### Detailed Description

Before any embodiments of this disclosure are explained in detail, it is to be understood that the disclosure is not limited in its application to the details of construction and the arrangement of components set forth in the following description. The disclosure is capable of other embodiments and of being practiced or of being carried out in various ways. As used herein, the term "a", "an", and "the" are used interchangeably and mean one or more; and "and/or" is used to indicate one or both stated cases may occur, for example A and/or B includes, (A and B) and (A or B). Also herein, recitation of ranges by endpoints includes all numbers subsumed within that range (e.g., 1 to 10 includes 1.4, 1.9, 2.33, 5.75, 9.98, etc.). Also herein, recitation of "at least one" includes all numbers of one and greater (e.g., at least 2, at least 4, at least 6, at least 8, at least 10, at least 25, at least 50, at least 100, etc.). Also, it is to be understood that the phraseology and terminology used herein is for the purpose of description and should not be regarded as limiting. Contrary to the use of "consisting", which is meant to be limiting, the use of "including," "containing", "comprising," or "having" and variations thereof is meant to be not limiting and to encompass the items listed thereafter as well as additional items.

Amounts of ingredients of a composition may be indicated by % by weight (or "% wt". or "wt.-%") unless specified otherwise. The amounts of all ingredients gives 100% wt unless specified otherwise. If the amounts of ingredients is identified by % mole the amount of all ingredients gives 100% mole unless specified otherwise. In particular, the amounts of ingredients may be indicated by parts per hundred parts fluoroelastomer.

Unless explicitly stated otherwise, all embodiments of the present disclosure can be combined freely.

According to a first aspect, the present disclosure provides a structural adhesive film having a first major surface and a second major surface opposite the first major surface, wherein the structural adhesive film exhibits on the second major surface a lower coefficient of friction according to DIN EN ISO 8295 than on the first major surface, wherein the coefficient of friction according to DIN EN ISO 8295 of the second major surface is at least 15 % lower than the coefficient of friction according to DIN EN ISO 8295 of the first major surface of the structural adhesive film.

Using a structural adhesive has the advantage of bonding the magnet securely into place. The use of a structural adhesive film has the advantage of easier handling, the option to use fast robotic or automated equipment for fast and precise application of the adhesive, and the particular advantage of cleaner processes when compared to pasteous adhesives. Furthermore, the fact that the second major surface exhibits a coefficient of friction at least 15 % lower than the coefficient of friction on the first major surface gives rise to yet another advantage: When placing the structural adhesive film as described herein with the first major surface onto the surface of a magnet, the second surface having less friction faces away from the magnet. This is the surface of the film covering the magnet which faces the surface of the pouch or bracket into which the magnet is inserted. This has the advantage that the film will glide into the pouch or bracket, without being sheared off the magnet. This allows for precise, clean and efficient bonding of magnets into pouches or brackets, even with very narrow gaps and general tight tolerances. Moreover, covering surfaces of magnets with the structural adhesive film according to the present disclosure yields the further advantage of additional protection of the surface of the magnet, and the magnet itself. That is, on at least this surface no other or additional surface protection, be it against corrosion or any other physical damage that may arise from transportation, handling or manufacturing processes. In this regard, the magnet could be at least partially covered by the structural adhesive film right after its manufacture or its initial manufacture, i.e. before further manufacturing, shipping or handling processes. This would give rise to both economical and practical advantages.

The structural adhesive film exhibits on the second major surface a lower coefficient of friction according to DIN EN ISO 8295 than on the first major surface, wherein the coefficient of friction according to DIN EN ISO 8295 of the second major surface is at least 15 % lower than the coefficient of friction according to DIN EN ISO 8295 of the first major surface of the structural adhesive film. At these differences in friction coefficients, there are marked differences in friction between the first and second major surfaces of the structural adhesive film. This allows for good application onto at least one surface of a magnet, and good insertion of the so-covered magnet into a pouch or bracket of a rotor or stator. Lower differences in friction coefficients were found to yield inferior results. Preferably, the coefficient of friction according to DIN EN ISO 8295 of the second major surface is at least 20 % lower, preferably at least 25 %, and more preferably at least 30 % lower than the coefficient of friction according to DIN EN ISO 8295 of the first major surface of the structural adhesive film.

It was found that there several measures with which the differences in friction coefficients between first and second major surfaces of the structural adhesive films according to the present disclosure may be achieved. Hence, it is preferred that the second major surface of the structural adhesive film comprises a mesh, a scrim, preferably a non-woven scrim, at least one oil, at least one structural adhesive distinct from the structural adhesive present on the first major surface, and any combinations and mixtures thereof. Preferably, the second major surface of the structural adhesive film comprises non-woven scrim and/or at least one oil. Non-woven meshs or scrims are commercially available and known in the art. For example, non-woven polyester meshs include meshs fromTFP (Technical Fibre Products Ltd), polyester fiber non woven, 8 g/mm², 0.07 mm thick. Oils can also be applied with the structural adhesive films as described herein. This is surprising, since most adhesive films, including structural adhesive films, require specifically de-oiling or de-fatting the surfaces of the substrate to be bonded. There are no specific limitations with regard to the oil, as far as it is able to lubricate the second major surface of the structural adhesive film such that the friction coefficient is effectively reduced as disclosed herein. Preferred exemplary oils are commercially available and include Anticorit PL 3802-39S, Anticorit RP 4107S, Anticorit PL 39 SX (all from Fuchs Company), Platinol B804/3 COW-1 (Oest Company) and Ferrocoat N6130 (Quaker Company).

With regard to the thickness of the structural adhesive film as disclosed herein, limitations arise mostly from the task of providing sufficient bond between a magnet and a substrate in a gap as small as possible. Since the adhesive film as described herein is a structural adhesive film which may provide strong adhesive bonds at even small thicknesses, it becomes possible to use actually relatively thin adhesive films. Thus, it is preferred that the structural adhesive film exhibits a thickness of up to 200 micrometer, preferably up to 180 micrometer, more preferably up to 160 micrometer.

The structural adhesive film according to the present disclosure is preferably a thermosettable structural adhesive film. This means it is curing at elevated temperatures to give a solid bond between the magnet and another substrate. In this regard, it is preferred that the structural adhesive film comprises at least one epoxy resin. Using epoxy resins has the advantage of using well-understood chemistry for structural adhesive films, strong bonds upon curing even when applied in thin films, chemical resistance and the provision of a certain corrosion resistance as well as low sensitivity against oily or fatty surfaces, in particular metal surfaces.

Preferably, the structural adhesive film according to the present disclosure comprises a thermosettable structural adhesive composition comprising
(a) an epoxy compound;
(b) a thermoplastic compound; and
(c) an epoxy curing agent.

### Epoxy compound

The structural adhesive film according to the present disclosure, comprises a thermosettable composition that preferably comprises an epoxy compound preferably having an average epoxy equivalent weight of less than 250 g/equivalent. Suitable epoxy compounds for use herein will be easily identified by those skilled in the art, in the light of the present description.

In a preferred aspect, the epoxy compound for use herein has an average epoxy equivalent weight of less than 250 g/equivalent, preferably of less than 230 g/equivalent, more preferably less than 220 g/equivalent, even more preferably less than 200 g/equivalent. Preferably, the epoxy compound for use herein has an average epoxy equivalent weight comprised between 100 and 200 g/equivalent, preferably between 150 and 200 g/equivalent, more preferably between 170 and 200 g/equivalent. Preferably still, the epoxy compound for use herein has a weight average molecular weight of not more than 700 g/mol, preferably not more than 500 g/mol, more preferably not more than 400 g/mol. Advantageously, the epoxy compound for use herein has a weight average molecular weight comprised between 200 and 400 g/mol, preferably between 300 and 400 g/mol, more preferably between 350 and 400 g/mol. The epoxy compound for use herein is preferably selected from the group of epoxy compounds having an average epoxy functionality, i.e. an average number of polymerizable epoxy groups per molecule, of at least 2 and, more preferably, from 2 to 4.

Any organic compound having at least one oxirane ring polymerizable by a ring opening reaction may be used as an epoxy compound in the thermosettable composition of the structural adhesive film according to the disclosure, provided they have an average epoxy equivalent weight of less than 250 g/equivalent. Such materials, broadly called epoxies, include monomeric epoxy compounds and polymeric epoxy compounds and can be aliphatic, cycloaliphatic, aromatic or heterocyclic. Useful materials generally have at least two polymerizable epoxy groups per molecule and, more preferably, from two to four polymerizable epoxy groups per molecule.

These epoxy compounds are generally liquid, or semi-liquid, at room temperature and are frequently also referred to as reactive epoxy thinners or reactive epoxy diluents. These compounds are preferably selected from the group of optionally substituted di- and polyglycidyl ethers of di- and polyphenols or aliphatic or cycloaliphatic hydroxyl compounds. Suitable epoxy compounds for use herein are commercially available from Momentive under tradename Epikote^{™} 828; from Dow Chemical Co. under tradename DER 331, DER 332 and DER 334; from Resolution Performance Products under tradename Epon^{®} 828; from Polysciences, Inc. under tradename Epon^{®} 825 / 826/ 830/ 834/ 863/ 824; from Hexion under tradename Bakelite@ EPR 164; from Huntsman under tradename Araldite^{®} GY 250/260; or from Leuna Harze under tradename EPILOX^{®} A 1900.

Epoxy compounds which are useful in the structural adhesive compositions according to the present disclosure are preferably derived from bisphenol A, bisphenol E, bisphenol F, bisphenol S, aliphatic and aromatic amines, such as methylene dianiline and aminophenols, and halogen substituted bisphenol resins, novolacs, aliphatic epoxies, and combinations thereof and/or therebetween. More preferably, the organic epoxies are selected from the group comprising diglycidyl ethers of bisphenol A and bisphenol F and epoxy novolacs.

The amount of epoxy compound in the thermosettable structural adhesive composition is preferably comprised from 20 to 50 wt.-%, preferably from 30 to 50 wt.-%, more preferably from 38 to 50 wt.-%, based on the total weight of the thermosettable structural adhesive composition.

### Thermoplastic compound

The thermosettable composition structural adhesive according to the present disclosure preferably further comprises a thermoplastic compound preferably having a softening point comprised between 60 °C and 140 °C as determined via differential scanning calorimetry (DSC) as known in the art. Suitable thermoplastic compounds for use herein will be easily identified by those skilled in the art, in the light of the present description. Preferably, the thermoplastic compound is a thermoplastic resin. Thus, the terms "thermoplastic compound" and "thermoplastic resin" may be used interchangeably in the present disclosure. Thermoplastic compounds and thermoplastic resins may also frequently be referred to as film forming agents.

In a preferred aspect, thermoplastic resins for use herein have a softening point comprised between 70 °C and 120 °C, preferably between 80 °C and 100 °C, more preferably between 85 °C and 95 °C. Suitable thermoplastic resins for use herein are preferably selected from the group consisting of polyether thermoplastic resins, polypropylene thermoplastic resins, polyvinyl chloride thermoplastic resins, polyester thermoplastic resins, polycaprolactone thermoplastic resins, polystyrene thermoplastic resins, polycarbonate thermoplastic resins, polyamide thermoplastic resins, and any combinations of mixtures thereof.

Suitable thermoplastic resins for use herein may be advantageously selected from the group of polyether thermoplastic resins, and preferably polyhydroxyether thermoplastic resins. In a preferred aspect, thermoplastic resins for use herein are selected from the group of polyhydroxyether thermoplastic resins, which are preferably selected from the group consisting of phenoxy resins, polyether diamine resins, polyvinylacetal resins, in particular polyvinyl butyral resins, and any combinations or mixtures thereof. Examples of suitable polyvinylacetal resins for use herein include Vinyl Chloride/Vinyl Acetate Copolymers, Carboxyl-Modified Vinyl Copolymers, and Hydroxyl-Modified Vinyl Copolymers, commercially available from Dow Chemicals. In a very preferred aspect of the disclosure, the thermoplastic resin for use herein is selected from the group of phenoxy resins. Suitable thermoplastic resins for use herein are commercially available from InChem Corporation under trade designation PKHP, PKHH, PKHA, PKHB, PKHC, PKFE, PKHJ, PKHM-30 or PKHM-301.

The amount of thermoplastic resin in the thermosettable composition of the structural adhesive film is typically comprised from 7 to 40 wt.-%, preferably from 10 to 24 wt.-%, more preferably from 15 to 24 wt.-%, of a thermoplastic compound, based on total weight of the thermosettable composition.

It is also preferred that the weight ratio of the epoxy compound and the thermoplastic compound, i.e. the thermoplastic resin is comprised between 0.5 and 4, preferably between 1 and 3, more preferably between 1.5 and 2.5, even more preferably between 1.8 and 2.2.

### Epoxy curing agent

The thermosettable composition of the structural adhesive film according to the present disclosure further comprises an epoxy curing agent. Any epoxy curing agent, commonly known in the art, may be used in the thermosettable composition of the structural adhesive composition as described herein. Suitable epoxy curing agents for use herein are materials that react with the oxirane ring of the organic epoxide to cause substantial cross-linking of the epoxide. These materials contain at least one nucleophilic or electrophilic moiety (such as an active hydrogen atom) that causes the cross-linking reaction to occur. Epoxy curing agents are distinct from epoxide chain extension agents, which primarily become lodged between chains of the organic epoxide and cause little, if any cross-linking. Epoxy curing agents as used herein are also known in the art as epoxy hardeners, epoxide hardeners, catalysts, epoxy curatives, and curatives.

Sometimes, differentiation is made between epoxy curing agents and accelerators which are used to increase the rate of the epoxide curing reaction. Accelerators typically are multifunctional materials which can also be classified as epoxy curing agents. Therefore, in the present specification, no differentiation is made between curing agents and accelerators.

Epoxy curing agents for use herein include those which are conventionally used for curing epoxy resin compositions and forming crosslinked polymer networks. Suitable epoxy curing agents may also be referred to as latent curing agents, which are typically chosen so that they do not react with the epoxy resin until the appropriate processing conditions are applied. Such compounds also include aliphatic and aromatic tertiary amines such as dimethylaminopropylamine and pyridine, which may act as catalysts to generate substantial crosslinking. Further, boron complexes, in particular boron complexes with monoethanolamine, imidazoles such as 2-ethyl-methylimidazole, guanidines such as tetramethyl guanidine, dicyanodiamide (often referred to as DICY), substituted ureas such as toluene diisocyanate urea, and acid anhydrides such as the 4-methyltetrahydroxyphthalic acid anhydride, 3-methyltetrahydroxyphthalic acid anhydride and methylnorbornenephthalic acid anhydride, may be employed. Still other useful epoxy curing agents include polyamines, mercaptans and phenols. Other epoxy curing agents for use herein include encapsulated amines, Lewis acids salts, transition metal complexes and molecular sieves. Preferably, the epoxy curing agent is selected from the group consisting of amines, acid anhydrides, guanidines, dicyandiamide and mixtures thereof. More preferably, the epoxy curing agent contains dicyandiamide. Suitable epoxy curing agents for use herein are commercially available from Air Products under tradename Amicure^{®} CG-1200.

The amount of epoxy curing agents in the thermosettable composition of the structural adhesive film is typically comprised from 2 to 15 wt.-%, preferably from 2 to 8 wt.-%, more preferably from 2 to 4 wt.-%, based on total weight of the thermosettable composition.

### Toughening agent

In a particular aspect, the thermosettable composition of the structural adhesive film may further comprise one or more toughening agents. Any toughening agent, commonly known in the art, may be used in the thermosettable composition of the structural adhesive film of the disclosure. The toughening agents are preferably selected from a group comprising core-shell toughening agents, CTBNs (carboxyl and/or nitrile terminated butadiene/nitrile rubbers) and high molecular weight amine terminated polytetramethylene oxide.

Core-shell toughening agents which are especially preferred, usually comprise different materials in the inner core region and the outer shell region, respectively. Preferably, the core may be harder than the shell but this is not required. The shell may comprise harder material and/or the shell may be layered in its construction. Most preferably, the inner hard core component is comprised of a single and/or a plurality of organic polymers and inorganic oxides from the first, second and/or third transition series of the periodic table such as silica, alumina, zirconia, and/or naturally occurring minerals such as feldspars, silicates, aluminates, zirconates, and/or other hardened materials such as carbides, nitrides, silicides, aluminides, and/or some combination thereof and therebetween. The outer soft shell component may be comprised of rubbers such as diene, olefin rubbers, natural rubber, polyisoprene, copolymers thereof, ethylene propylene monomer rubber, diene-acrylonitrile copolymers, copolymers of vinyl aromatic monomers, styrenebutadiene copolymers known as SBR rubbers, and terpolymers of dienes with acrylonitrile or unsaturated esters and styrene or vinyl toluene. The soft shell preferably includes modifications with functionalities such as carboxyl, hydroxyl, epoxy, cyanates, isocyanates, amino, and thiol which can react with the epoxy components of the precursor. Core-shell toughening agents which are useful in the thermosettable composition are commercially available, for example, from Rohm and Hass under the trade designation Paraloid^{™}.

CTBN toughening agents react through their carboxyl and/or nitrile functional groups with the epoxide component of the precursor during curing thereby introducing their butadiene/nitrile rubber portion as a soft, shock-absorbing segment into the epoxy network forming a hard segment. CTBN toughening agents which are useful in the present disclosure are commercially available, for example, from Hanse Chemie AG, Hamburg, Germany, under the trade designation Albipox^{™}.

A high molecular weight amine terminated polytetramethylene oxide useful in the thermosettable composition is commercially available, for example, from 3M Company, St. Paul/MN, USA, under the trade designation "3M EPX^{™} Rubber".

The amount of the one or more toughening agents present in the thermosettable composition is typically comprised between from 10 to 40 wt.-%, preferably between 10 and 30 wt.-%, more preferably between 10 and 20 wt.-%, based on total weight of the thermosettable composition.

In a particular aspect of the structural adhesive composition according to the present disclosure, the weight ratio of the toughening agent and the thermoplastic resin is advantageously comprised between 1 and 4, preferably between 1 and 3, more preferably between 1.5 and 2.5, even more preferably between 1.8 and 2.2.

### Non-spherical particles

The structural adhesive compositions according to the present disclosure preferably comprise non-spherical particles. Using non-spherical particles has the effect of providing an improved failure mode and high mechanical strength to the adhesive compositions and adhesive films according to the present disclosure. "Failure mode" has the meaning as common in the art, i.e. the desirable "cohesive failure mode" describes a case where the failure appears only in the adhesive layer, and not between the adhesive layer and the substrate.

It is preferred that the non-spherical particles are inorganic particles, preferably consist of a material selected from metal, carbon and glass. The metal is preferably selected from iron, steel, aluminium, titanium, magnesium and mixtures and alloys thereof. Non-spherical particles consisting of carbon are preferred. In this regard, graphite and carbon black are preferred, in particular graphite, more preferably thermally expandable graphite.

The particles generally have a non-spherical shape. This has the common meaning used in the art, i.e. the particle are not spherical. Spherical particles generally have an aspect ratio of about 1:1, i.e. one diameter of the particle is about the same as a second diameter of the same particle being about perpendicular to the first diameter of said particle. Thus, it is preferred that the particles have either an irregular shape or a flake shape. "Irregular shape" has the meaning as commonly used in the art, i.e. describing a particle lacking any particular symmetry. Since flake-shaped particles gave the best results with regard to adhesive strength and cohesive failure mode, flake-shaped particles are preferred in the structural adhesive compositions according to the present disclosure. Preferably, the non-spherical particles as described herein have an aspect ratio of at least 1:2.5, preferably in the range of from 1:2.5 to 1: 20, more preferably in the range of from 1:4 to 1:7. The aspect ratio of a particle refers to the ratio of the diameter or cross-section of the particle to the length of the particle. That is, the aspect ratio is determined by assuming the maximum diameter or the maximum length of the particle to be the length of the particle. The diameter of the particle is the diameter of a cross-section taken perpendicular to the length direction. When the cross-section is not round, the maximum length of the particle is assumed to be the diameter of the particle.

It was further found that the above-described effects may be linked to the grain size of the non-spherical particles. Particles above a certain grain size resulted in adhesive strength and failure mode which compared unfavourable to corresponding performances of structural adhesive compositions where non-spherical particles having a grain size of 200 µm and less were used. Hence, it is preferred that the non-spherical particles have a grain size of 200 µm and less. Similarly, the non-spherical particles should have at least a certain grain size in order to show any influence to the failure mode. Accordingly, it is preferred that the non-spherical particles have a grain size of at least 30 µm. Thus, it is preferred that the non-spherical particles, preferably flake shaped particles, have a grain size in the range of from 30 µm to 200 µm. In another preferred embodiment of the present disclosure, the non-spherical particles have an irregular shape and a grain size of 100 µm and less, preferably of 80 µm and less, preferably in the range of from 30 µm to 100 µm, more preferably in the range of from 30 µm to 80 µm. The grain size of the particles is preferably determined as described in ISO 8130-13:2001; German version EN ISO 8130-13:2010. This part of ISO 8130 specifies a method for the determination of the equivalent-sphere particle size distribution of coating powders by laser diffraction.

It is preferred that the composition comprises the non-spherical particles (d) in an amount of from 0.1 to 10 wt.-% relative to the total weight of the composition, preferably in an amount of from 0.5 to 7 wt.-% relative to the total weight of the composition, more preferably in an amount of from 1.0 to 5 wt.-% relative to the total weight of the composition. Amounts lower than 0.1 wt.-% showed less significant effects, while amounts higher than 10 wt.-% either also showed no enhanced effects compared to lower amounts or even gave rise to undesired side effects with regard to the adhesive properties of the compositions.

Examples for suitable non-spherical particles as described herein are ES 100C10, ES 20C200, Expan C-8099 lite, Graphite FP 99.5 and Eckart Aluminium.

### Mineral filler

The structural adhesive compositions according to the present disclosure may further comprise at least one mineral filler capable of absorbing water. Combining such a mineral filler with the epoxy compound, the thermoplastic resin, the epoxy curing agent and the non-spherical particles has the effect that an increased corrosion resistance and/or aging resistance of the composition and the films described herein may be observed. In this regard, it is preferred that the mineral filler is capable of chemically reacting with water. This has the common meaning in the art, i.e. the mineral filler undergoes a chemical reaction with water, thereby effectively absorbing water which may come into contact with the structural adhesive compositions, either in uncured state or even more preferably in cured, i.e. thermoset state in application. Without wanting being bound to theory, it is believed that this specific property of the mineral filler as described herein removes water which may have entered the cured adhesive and which could otherwise may lead to weakened bonding within the adhesive or bonding between adhesive and substrate.

It is preferred that the mineral filler is selected from the group consisting of metal oxides and metal hydroxides, preferably selected from the group consisting of MgO, CaO, BaO, K₂O, Li₂O, Na₂O, SrO, and mixtures thereof. These compounds were found to show particular good water-absorbing capabilities. This is probably due to their capability of chemically reacting with water. The mineral filler may advantageously be employed as a blend together with other compounds, in particular other mineral fillers. These compounds may act as further reinforcement of the structural adhesive composition or even add to the adhesive strength. Thus, it is preferred that the at least one mineral filler is MgO, CaO, BaO, K₂O, Li₂O and/or Na₂O, preferably is a blend comprising MgO, CaO, BaO, K₂O, Li₂O, Na₂O and SiO₂, more preferably is a blend comprising MgO, CaO and SiO₂, metal silicates, carbonates, silicates, hydrated silicates (talc), borates, oxides, hydroxides, sulfates titanates, zirconates, even more preferably is a blend comprising CaO and SiO₂. With regard to the SiO₂, it is preferred that it is selected from fumed silica, fused silica, silica gel, and quartz, preferably selected from fumed silica and fused silica, and more preferably is fused silica.

CaO may be obtained commercially, as well as SiO₂ such as fused silica. For example, fused silica may be obtained from Minco Inc. under the trade designation MinSil 20. Hydrophobic fumed silica is commercially available as Aerosil^{™} from Degussa or CAB-O-SIL^{™} from Cabot.

The structural adhesive composition according to the present disclosure preferably comprises the mineral filler in an amount of from 0.5 to 50 wt.-% relative to the total weight of the composition, preferably of from 2 to 40 wt.-% relative to the total weight of the composition, more preferably of from 10 to 30 wt.-% relative to the total weight of the composition.

In a further preferred embodiment of the present disclosure, the structural adhesive composition comprises as mineral filler component silica, preferably fused silica, in an amount of from 5 to 30 wt.-% relative to the total weight of the composition, preferably from 10 to 20 wt.-% relative to the total weight of the composition, and calcium oxide in an amount of from 0.5 to 20 wt.-% relative to the total weight of the composition, preferably from 2 to 14 wt.-% relative to the total weight of the composition.

### Reactive diluent

It is preferred that the structural adhesive compositions according to the present disclosure further comprise at least one component comprising at least one epoxy moiety and at least one linear or branched alkyl group. These compounds may act as reactive diluents. Thus, the term reactive diluent may be used interchangeably with the term component having at least one epoxy moiety and at least one linear or branched alkyl group. The use of these compounds may have the effect that while adhesion is generally improved, the adhesion to substrate surfaces, in particular metal substrate surfaces, which are at least partially covered with oil, is also improved. This is particularly useful for industrial applications, in particular where metal substrates are bonded to other metal substrates. An example for such a process where improved adhesion properties on oily metal surfaces are highly desirable is the so-called body-in-white process commonly used in the automotive industry. Without wanting to being bound to theory, it is believed that the presence of alkyl groups increase the compatibility between the adhesive and the oil which may be present on metal surfaces of substrates in industrial processes. This may have the effect that adhesion strength is improved, which also leads to better corrosion protection of the bonded joints. On the other hand, the presence of the at least one epoxy group may ensure that the reactive diluent is build into the epoxy matrix.

Reactive diluents useful for the structural adhesive compositions according to the present disclosure may be commercially obtained under the trade designations Cardolite UltraLite 513, Cardura E10P and Araldite PY 4122.

It is preferred that the structural adhesive compositions according to the present disclosure comprise at least one reactive diluent in an amount of from 0.1 to 20 wt.-% relative to the total weight of the composition, preferably of from 1 to 15 wt.-% relative to the total weight of the composition, more preferably of from 1.5 to 10 wt.-% relative to the total weight of the composition, and even more preferably of from 2 to 7 wt.-% relative to the total weight of the composition.

In a preferred embodiment, the structural adhesive composition according to the present disclosure comprises:
(a) from 20 to 50 wt.-%, preferably from 30 to 50 wt.-%, more preferably from 38 to 50 wt.-%, of an epoxy compound preferably having an average epoxy equivalent weight of less than 250 g/equivalent, preferably less than 230 g/equivalent, more preferably less than 220 g/equivalent, even more preferably less than 200 g/equivalent ;
(b) from 7 to 40 wt.-%, preferably from 10 to 24 wt.-%, more preferably from 15 to 24 wt.-%, of a thermoplastic compound preferably having a softening point in the range of from 60 °C and 140 °C;
(c) from 2 to 15 wt.-%, preferably from 2 to 8 wt.-%, more preferably from 2 to 4 wt.-%, of an epoxy curing agent;
(d) 0.1 to 10 wt.-% relative to the total weight of the composition, preferably in an amount of from 0.5 to 7 wt.-% relative to the total weight of the composition, more preferably in an amount of from 1.0 to 5 wt.-% relative to the total weight of the composition of non-spherical particles; and
(e) optionally, from 0.5 to 50 wt.-% relative to the total weight of the composition, preferably of from 2 to 40 wt.-% relative to the total weight of the composition, more preferably of from 10 to 30 wt.-% relative to the total weight of the composition of a mineral filler.

The thermosettable structural adhesive composition according to the present disclosure may optionally comprise further components, additives, performance modifiers and/or agents such as blowing agents, wetting agents, flame retardants, impact modifiers, toughening agents, heat stabilizers, colorants, processing aids and lubricants.

### Blowing agent

In a particular aspect, the thermosettable structural adhesive composition may further comprise one or more blowing agents. Any blowing agent, commonly known in the art, may be used in the thermosettable structural adhesive composition of the present disclosure.

By including a blowing agent in the thermosettable structural adhesive film, the structural adhesive composition becomes heat expandable and may be referred to as an expandable structural adhesive composition. Accordingly, by heating, for example during the heating to cause thermosetting of the adhesive sheet, the structural adhesive composition expands which helps sealing of any gap in a metal joint. As a result, corrosion resistance may be improved. The one or more blowing agents are preferably selected from the group of non-encapsulated and encapsulated blowing agents.

Non-encapsulated blowing agents, which are sometimes also referred to as chemical blowing agents, release a gaseous compound such as nitrogen, nitrogen oxide, hydrogen or carboxide dioxide during heating. Chemical blowing agents which are useful in the present disclosure include, for example, azobisisobutyronitriles, azodicarbonamides, carbazides, hydrazides, non-azo chemical blowing agents based on sodium borohydride or sodium bicarbonate/citric acid and dinitrosopentamethylenetetramine. The amount of the one or more chemical blowing agents is typically comprises between 0.2 and 2 wt.-%, preferably between 0.5 and 1.5 wt.-%, based on the total weight of the thermosettable composition.

Encapsulated blowing agents usually comprise liquified gases such as, for example, trichlorofluoromethane or hydrocarbons such as n-pentane, iso-pentane, neo-pentane, butane and/or iso-butane encapsulated in a polymeric thermoplastic shell. Upon heating the liquified gas expands and enlarges or blows up the thermoplastic shell like a "microballoon". Typically, the amount one or more encapsulated blowing agents may be advantageously comprised between from 0.5 to 10 wt.-%, preferably from 1 to 5 wt.-%, more preferably from 1 to 2 wt.-%, based on the total weight of the thermosettable composition. Encapsulated blowing agents, which are useful in the thermosettable composition, are commercially available, for example, from Pierce & Stevens Chemical Corp under the trade designation Micropearl^{™}, from Matsumoto under the trade name Microsphere^{™} or from Akzo Nobel under the trade name Expancel^{™}.

In a particular aspect, the amount of one or more blowing agents is selected such as to provide the structural adhesive composition with a free expansion rate upon curing of not more than 50%, preferably not more than 40 %, more preferably not more than 30 %, when subjecting the structural adhesive film to a curing temperature above the activation (onset) temperature of the curing reaction, and when measured as described in the Test Methods section. More in particular, the amount of one or more blowing agents is selected such as to provide the structural adhesive composition with a free expansion rate upon curing of between 10 and 40 %, preferably between 10 and 30 %, more preferably between 15 and 25 %.

Another aspect of the present disclosure is a corrosion resistant structural adhesive film, comprising the structural adhesive composition as described herein.

Using structural adhesive films provides several advantages for the user in particular in industrial applications in that such films may be particularly suitable for automated handling and applications, in particular by fast robotic equipment. More particularly, the structural adhesive film of the present disclosure enables efficient automation of the process of forming a joint between metal plates, which is of special interest e.g. in the automotive industry. In addition, the structural adhesive film offers good adhesive properties such as good T-peel strength and overlap shear strength, even on metal surfaces at least partially covered with oil, and show good adhesive properties even in an aged state, such as after a cataplasma test.

The structural adhesive film according to the present disclosure may be readily prepared by a number of techniques. For example, the various components may be added under ambient conditions to a suitable internal mixing vessel, such as a Mogul mixer. The mixing temperature is not critical and the mixing of the first and second epoxy components and the optional toughening agent component is typically performed at a temperature of 80-85 °C. When the epoxy curing agent component and the optional blowing agent component is added the temperature may preferably be decreased to not more than 70 °C. Mixing is continued until the components form a homogeneous mixture, after which time the thermosettable structural adhesive composition is removed from the mixer.

Due to their excellent processability the thermosettable composition can be processed as a film by conventional application equipment such as extruders or hot-melt coaters. The thermosettable composition may be processed as a self-supporting film or may alternatively be coated/laminated onto a suitable liner, such as e.g. a siliconized liner. The structural adhesive film of the disclosure may be applied to various substrates such as, for example, metals (for example, Al, Al alloys, titanium or stainless steel) or other substrates comprising, for example, glass, boron, carbon, Kevlar fibers, epoxy, phenols, cyanate esters and polyester matrices.

The structural adhesive film according to the disclosure is typically a soft conformable film, and may or may not be tacky at room temperature. Prior to curing, the structural adhesive film is preferably deformable and drapable so that it can applied to curved surfaces and assume any two-dimensional shape.

The structural adhesive film may be packaged in the form of rolls of film material, rolls of tapes, i.e., lengths of material in narrow widths, or stacks of sheets cut to a desired dimension or shape for the end use. If the adhesive film is tacky, a release liner may be interleaved between adjacent sheets or wraps of a roll. In the context of the present disclosure, it has been surprisingly found that where the structural adhesive film is packaged in the form of rolls of film material, the corresponding roll of film material is particularly resistant to oozing (i.e. the diffusing of epoxy resin out if the roll of film) upon storage. Without wishing to be bound by theory, it is believed that the long polymeric chains comprised in the thermoplastic resin participate in retaining the epoxy resin into the structural adhesive film upon storage. In particular, the structural adhesive film of the disclosure remains oozing-resistant when packaged in the form of rolls of film material having a length of above 100, preferably above 200, more preferably above 300, even more preferably above 500, still more preferably above 700, yet more preferably above 800 meters, and having a width typically comprised between 5 and 40 mm, in particular between 10 and 30 mm, more in particular between 10 and 20 mm.

The structural adhesive film of the disclosure may include one or more layers. The adhesive film may also include a netting or carrier layer. A suitable netting or carrier layer includes an open cloth or fabric of a polymeric material. The carrier layer preferably comprises cotton, glass, polyester, polyamide, polypropylene, polyurethane, polyethylene, polyviscose, carbon fibers, aramid fibers, metal and any combinations and mixtures thereof. Generally, the netting will be soft and may be stretchable. A particular example includes a heat set, soft and stretchy open nylon knitted cloth. The netting may have a thickness of 1 to 15 g/m², for example 5 to 12 g/m². A useful material includes 3M^{™} Scotch-Weld^{™} 3336 available from 3M Co. The structural adhesive film may also include an open non-woven layer such as a scrim.

The structural adhesive film according to the present disclosure is suitable to provide any benefit selected from the group consisting of form stability, flexibility, robustness, handling properties, suitability for automated handling and application, wash-out resistance with warm water, in uncured state; excellent bonding and sealing performance, high mechanical strength, water barrier properties, gap filling properties, controlled expansion behaviour, and smooth finish after curing.

As apparent from above, the structural adhesive film may also consist of only the structural adhesive composition as described herein. Accordingly, the advantages and effects as described in connection with the composition also apply for the film and vice versa.

The final adhesive bond advantageously has good crash resistance and preferably has a good elongation at break such that stress that might be created at the joint can be adsorbed without causing failure of the bond. Further, the structural adhesive film according to the disclosure is sufficiently resistant to washing out and accordingly, the metal parts joint together by the adhesive sheet can be subjected to a washing operation, for example as may be necessary prior to painting. Due to the properties of the structural adhesive film according to the present disclosure, it is preferred that the structural adhesive film is a magnet bonding film.

The present disclosure further provides method for bonding magnets into brackets or pouches of a device, the method comprising the following steps:
(I) Applying at least one structural adhesive film according to any one of the preceding claims to a at least one surface of a magnet such that the first major surface of the structural adhesive film is in contact with the at least one surface of the magnet and the second major surface of the structural adhesive film faces away from the at least one surface of the magnet;
(II) Inserting the magnet having the structural adhesive film on at least one of its surfaces into a bracket or pouch of a device such that the structural adhesive films is in contact with both at least one surface of the bracket or pouch of the device and the at least one surface of the magnet;
(III) Curing the structural adhesive film, thereby bonding the magnet to the bracket or pouch of the device.

The method according to the present disclosure where at least one structural adhesive films as described herein is applied with its first major surface onto at least one surface of a magnet is advantageous in that the second major surface having the lower friction coefficient is facing outwards. This means that the structural adhesive film may stay securely on the magnet while being inserted into a bracket or pouch of a device in step (II) with a reduced risk of being shared off the magnet. Also, the structural adhesive tape provides a cover of the magnet against chemical (such as moisture or dirt) and physical influences. Accordingly, it is preferred that the structural adhesive film is applied to the magnet such that the complete surface of the magnet is covered by the structural adhesive film. This has the advantage that the corrosion protection coatings or paints with which magnets usually are covered with directly after their manufacture may be dispensed with, which helps reducing costs and is environmentally benign. Due to the fact that the structural adhesive film is stable enough, in particular when comprising a mesh or scrim as described herein, for being applied with fast robotic or automated equipment, this way of application of the structural adhesive film onto the surface of the magnet is preferred herein. It is evident that automated application via e.g. robotic heads may be much quicker and more precise than manual application. Preferably, the magnet is wrapped in the structural adhesive film. In this regard, it is particularly preferred that the magnet is is wrapped entirely in the structural adhesive film. Then, the protection effect of the structural adhesive film to the magnet is maximised.

With regard to the term "magnet" as used herein, the normal meaning of the term is understood, i.e. "one" magnet. In particular, the term "magnet" as used herein means "permanent" magnet, i.e. a metallic object exhibiting a certain magnetism, usually ferromagnetism. Also, the term "magnet" may comprise "a plurality of magnets", or "a bundle of magnets". Thus, it is preferred that the magnet as described herein comprises a plurality of single magnets, preferably at least two magnets, preferably at least three magnets, and more preferably at least four magnets. Using such multitudes or bundles of magnets may give rise to certain advantages with regard to the strength of the magnetism of the resulting permanent magnet.

In step (III) of the method according to the present disclosure, the structural adhesive film is cured, whereby the magnet is bonded to the bracket or pouch of the device. Curing of a structural adhesive film commonly involves heating, therefore, it is preferred that curing in step (III) comprises heating. Preferably, heating comprises heating to a temperature of at least 100 °C, preferably at least 120 °C, more preferably 140 °C. Heating at these temperatures will securely cure the structural adhesive film, thereby also securing the magnet in place. The magnet may be a permanent magnet when being used in the method as described herein, i.e. the magnet is magnetized at a point in time when the method is started. Accordingly, it is preferred that the magnet is already magnetized before being subjected to application of the structural adhesive film. Alternatively, the magnet may be magnetized after step (II), after step (III), or during step (III). Magnetizing the magnet during step (III) may be advantageous since oftentimes, magnets are magnetized when being sintered, and sintering usually is effectuated upon heating. Hence, heating in step (III) may then have two parallel effects, namely curing the adhesive film, and sintering and magnetizing the magnet. This may also be advantageous due to the handling problems which may arise from handling a strong magnet during transport and during manufacturing operations such as inserting into brackets or pouches of rotors and stators of engines or generators. Preferably, the magnet is magnetized during step (III), wherein step (III) comprises heating to a temperature in the range of from 140 to 220 °C, thereby magnetizing the magnet and curing the structural adhesive film. With regard to the device, it is preferred that it is a rotor or stator of an electric engine or of a electric power generator.

The present disclosure further provides a bonded assembly, comprising a magnet adhesively bonded to or into a device with the structural adhesive film as described herein. Preferably, the assembly is at least part of a rotor or stator of an electric engine or an electric power generator.

Furthermore, the present disclosure provides a use of the structural adhesive film according to the present disclosure for adhesively bonding magnets. Preferably, the use comprises adhesively bonding magnets into rotor or stator of an electric engine or a generator of electricity. In this regard, it is preferred that the use forms part of manufacturing operations in the automotive industry, the aerospace industry, the commercial transportation industry, the shipbuilding industry, or the power generation industry.

### Examples

The present disclosure is further described without however wanting to limit the disclosure thereto. The following examples are provided to illustrate certain embodiments but are not meant to be limited in any way. Prior to that some test methods used to characterize materials and their properties will be described.

### Methods

### Overlap Shear Strength according to DIN EN 1465 (issued 2009).

Overlap shear strength is determined according to DIN EN 1465 using a Zwick Z050 tensile tester (commercially available by Zwick GmbH & Co. KG, Ulm, Germany) operating at a cross head speed of 10 mm/min on hot dipped galvanized steel strips (commercially available as DX 54D-Z100 from ThyssenKrupp Steel, Germany) having the following dimension 100 mm X 25mm X 0.8 mm and coated with 3 g/m² Oil (PL 3802-39S commercially available from Fuchs Petrolub AG, Germany). For the preparation of an Overlap Shear Strength test assembly the epoxy film to be tested (having a thickness of 0.4 mm) is applied on one end of a first steel strip and covered by a second steel strip forming an overlap joint of 10 mm. The overlap joints are then clamped together using two binder clips and the test assemblies placed into an air circulating oven with a minimum baking cycle of 20 min at 160 °C and a maximum bake cycle of 45 min at 200 °C. Hereby the test assemblies are heated up and cooled down using 3 °C/minute ramps. Test assemblies are then conditioned for 24 hours at ambient condition 23 +/-2 °C and 50 +/% % relative humidity before testing. As the test temperatures for measuring Overlap Shear Strength are varied from -40 °C to room temperature up to +80 °C, the tests assemblies are placed prior to testing on the Zwick tensile tester into an environmental chamber (commercially available by RS Simulatoren, Oberhausen, Germany) and the Overlap shear strength room temperature (23°C +/- 2°C). 3 samples are measured for each of the examples at the three different test temperatures and results averaged and reported in MPa.

### Failure Mode:

Samples were prepared as described above for the overlap shear strength. Then, the overlap shear strength as described above until the straps were separated, i.e. the samples were destroyed. The samples were visually inspected by the naked eye and evaluated as follows: if the failure was completely within the adhesive layer, the failure mode was considered as "cohesive failure". However, if a failure was observed in that at least part of the adhesive layer had separated from the metal substrate, the failure mode was considered "adhesive failure". From an application point of view, the "cohesive failure mode" is highly desirable and therefore strongly preferred.

### Friction coefficient:

The test procedure set forth in DIN EN ISO 8295 (determination of coefficient of friction was followed. The apparatus used comprised of a traction-load machine, pulling over an idler via a rigid connection a sled weight down by a load. Under the sled, and under a support plate, the sample was put. The force used to pull the sled was measured via the traction loading machine (Zwick Z0, 1, 500 N). The sled was 13 cm x 11 cm (483 g). The additional load (or weight) was 1 kg. The dimension of the support plate corresponded to the dimension of the specimen to be measured. The thickness of the support plate was 0.7 mm, and the bottom plate over which the sample and the sled was tracked was galvanized steel.

### Materials:

**Table 1: Materials used in the examples and comparative examples.**

| **Material** | **Function** | **Description** |
|---|---|---|
| Epikote 828 | Epoxy resin | Trade designation of a liquid reaction product of epichlorohydrin and bisphenol A having an approximate epoxy equivalent weight of 184 - 190 grams/equivalent. Commercially available by Momentive. |
| Epon 828 | Epoxy resin | Trade designation of a solid reaction product of epichlorohydrin and bisphenol A having an approximate epoxy equivalent weight of 185 - 192 grams/equivalent according to ASTM D 1652. Commercially available by Resolution Performance Products. |
| D.E.R 671 | Epoxy resin | Trade designation of a solid reaction product of epichlorohydrin and bisphenol A having an approximate epoxy equivalent weight of 475 - 550 grams/equivalent according to ASTM D 1652. Commercially available by Dow Chemical Co. |
| Epilox A50-02 | Epoxy resin | Trade designation of a solid reaction product of epichlorohydrin and bisphenol A having an approximate epoxy equivalent weight of 450 - 500 grams/equivalent according to ASTM D 1652. Commercially available by Leuna Harze. |
| Thioplast EPS 350 | Epoxy resin | Trade designation of an epoxydized polysulfide having an approximate epoxy equivalent weight of 250 grams/equivalent according to ASTM D 1652. Commercially available by Akros Chemicals. |
| PK-HP 200 | Thermoplastic resin | Trade designation of a phenoxy resin. Commercially available by InChem Corporation. |
| PK-HH | Thermoplastic resin | Trade designation of a phenoxy resin. Commercially available by InChem Corporation. |
| Epodil 757 | Flexibilizing and wetting agent | Trade designation of a glycidyl ether of cyclohexane dimethanol. Commercially available by Air Products and Chemicals, Inc. |
| Paraloid 2650A | Thoughening agent | Trade designation of a core-shell toughening agent based on butadiene rubber. Commercially available by Rohm and Hass. |
| Amicure CG1200 | Primary Curative | Trade designation of 2-cyanoguanidine (dicyandiamide), available from Air Products. |
| Omicure U52M | Curative accelerator | Trade designation of 4,4 methylene bisphenyl dimethyl urea, available from CVC Speciality Chemicals, USA. |
| Epodil 757 | Reactive diluent | Trade designation of a glycidyl ester, available from Air Products. |
| Araldite PY 4122 | Reactive diluent | Trade designation of a bisphenol A type epoxy resin, available from Huntsman Corp. |
| Cardolite Ultra LITE 513 | Reactive diluent | Trade designation of a glycidyl ether, available from Cardolite Corp. |
| Micropearl F48D | Physical blowing agent | Trade designation of a thermoexpandable microcapsule produced by encapsulating volatile hydrocarbon with acrylic copolymer. Commercially available by Pierce & Stevens Chemical Corp. |
| MinSil 20 | Fused Silica | Trade designation of fused silica commercially available by Minco,lnc., USA |
| Aerosil R202 | Silica filler /hydrophobizing agent | Trade designation of a fumed silica aftertreated with a polydimethysiloxane, available commercially by Degussa AG, Germany. |
| Eurocell 140 | Particulate filler | Trade designation of expanded perlite, commercially available by Europerl, Germany. |
| Glasperlen | Particulate spacer | Trade designation of glass beads (average grain size 90□m), commercially available by Kominex Mineralmahlwerk, GmbH. |
| Optiveil Scrim | Polyester non-woven scrim | TFP (Technical Fibre Products Ltd, polyester fiber non woven, 8 g/mm², 0.07 mm thick |

### Preparation of examples and comparative examples

The epoxy-based compositions of the present disclosure are prepared by combining the ingredients from the list of materials of table 1 in a highspeed mixer (DAC 150 FVZ Speedmixer, from Hauschild Engineering) stirring at 3000 rpm. In Table 2, all concentrations are given as wt.-%.

In a first step the epoxy resin, the thermoplastic phenoxy resin and the core shell toughening agent are mixed together for 2 min, thereby yielding a masterbatch formulation with ratios as set forth in table 2. This masterbatch is then placed into an air-driven oven at temperature of 95 °C for about 1 h. The hot mixture is again stirred for 2 min at 3000 rpm in the speed mixer to ensure complete dispersion of the three ingredients. Then the mixer temperature is reduced to 60°C and the two curatives together with the further ingredients as set forth in table 3 are added to the mixture, followed by mixing for an additional 2 minutes under vacuum. The resulted mixture is a paste having a uniform consistency.

**Table 2: Composition of Masterbatch (MB).**

| Raw Materials | wt.-% |
|---|---|
| Epon 828 | 57.94 |
| Phenoxy Resin | 27.68 |
| Paraloid 2650 | 14.38 |
| Total | 100.00 |

**Table 3: Composition of Example1**

| | Ex. 1 |
|---|---|
| Masterbatch (MB) | 68.61 |
| Thioplast EPS 350 | |
| Glass beads | |
| Amicure CG 1200 | 2.06 |
| Omicure U52M | 1.03 |
| Epodil 757 | 1.72 |
| Cardura E10P | 3.43 |
| Araldite PY 4122 | |
| CardoliteUltra lite 513 | |
| Fused Silica | 17.15 |
| Calcium oxide | 4.29 |
| Graphite flakes | 1.72 |
| Total | 100 |

### Samples preparation:

### Ex. 1: Structural adhesive film on a scrim

By using a knife coater the mixture of ex. 1 is laminated at 80 °C to a 0.1 mm film on a siliconized liner (liner side, LS). The scrim is laminated on the surface at 50 to 60 °C with a laminator roll such that the scrim is embedded and sticks in the adhesive layer (non-liner side, NLS). The formed film was soft and homogenous when cooled down.

As comparative example 1, a commercially available structural adhesive film for magnet bonding was used (AU-205 from 3M Company).

### Ex. 2: Structural adhesive film with mesh.

A film was prepared following the general procedure of Ex. 1. This time, a polyester non-woven scrim of 4 g/m² scrim was laminated onto one surface (non-liner side, NLS).

### Ex. 3: Structural adhesive film with mesh and oil:

A film according to ex. 2 was uniformly oiled with about 2 g/m² with a commercially available oil (Anticorit PL 3802-39") on the mesh-side (NLS).

The dynamic friction of the surfaces of the films according to the examples and comparative examples was then determined according to DIN EN ISO 8295. The results are summarized in table 4.

**Table 4: Friction coefficients of examples and comparative examples.**

| sample | Ex. 1 LS | Ex. 1 NLS | Comp. Ex. 1 side 1 | Comp. Ex. 1 side 2 | Ex. 2 LS | Ex. 2 NLS | Ex. 3 NLS |
|---|---|---|---|---|---|---|---|
| F [N/cm] | 4.5 | 2.6 | 5.3 | 5.6 | 5.8 | 3.8 | 2.8 |

Next, overlap shear strengths of the oiled side (NLS) and non-oiled side of Ex. 2 were determined according to DIN EN 1465. Also, the failure modes were determined. The results are summarized in table 5.

**Table 5: Overlaps shear strength and failure mode of Ex. 2.**

| | Ex. 2 NLS (oil) | Ex. 2 LS (no oil) |
|---|---|---|
| OLS [MPa] | 25.6 | 25.1 |
| Failure mode | cohesive | cohesive |

Similarly, overlap shear strengths and failure modes of the LS side of Ex. 1 and side 1 of Comp. Ex. 1 were determined. The results are summarized in table 6. No delamination on the scrim side of Ex. 1 was observed.

**Table 6: Overlaps shear strength and failure mode of Ex. 1 and comp. ex. 1.**

| | Ex. 1 LS | Comp. Ex. 1, side 1 |
|---|---|---|
| OLS [MPa] | 30 | 30.4 |
| Failure mode | Cohesive | Cohesive |

## Claims

1. A structural adhesive film having a first major surface and a second major surface opposite the first major surface, wherein the structural adhesive film exhibits on the second major surface a lower coefficient of friction according to DIN EN ISO 8295 than on the first major surface, wherein the coefficient of friction according to DIN EN ISO 8295 of the second major surface is at least 15 % lower than the coefficient of friction according to DIN EN ISO 8295 of the first major surface of the structural adhesive film.

2. The structural adhesive film according to claim 1, wherein the structural adhesive film is a thermosettable structural adhesive film.

3. The structural adhesive film according to any one of the preceding claims, wherein the coefficient of friction according to DIN EN ISO 8295 of the second major surface is at least 20 % lower, preferably at least 25 %, and more preferably at least 30 % lower than the coefficient of friction according to DIN EN ISO 8295 of the first major surface of the structural adhesive film.

4. The structural adhesive film according to any one of the preceding claims, wherein the second major surface of the structural adhesive film comprises a mesh, a scrim, preferably a non-woven scrim, at least one oil, at least one structural adhesive distinct from the structural adhesive present on the first major surface, and any combinations and mixtures thereof.

5. The structural adhesive film according to any one of the preceding claims, wherein the structural adhesive film exhibits a thickness of up to 200 micrometer, up to 180 micrometer, up to 160 micrometer.

6. The structural adhesive film according to any one of the preceding claims, wherein the structural adhesive film comprises a thermosettable structural adhesive composition comprising
(a) an epoxy compound;
(b) a thermoplastic compound; and
(c) an epoxy curing agent.

7. The structural adhesive film according to any one of the preceding claims, wherein the structural adhesive film is a magnet bonding film.

8. A method for bonding magnets into brackets of a device, the method comprising the following steps:
(I) Applying at least one structural adhesive films according to any one of the preceding claims to a at least one surface of a magnet such that the first major surface of the structural adhesive film is in contact with the at least one surface of the magnet and the second major surface of the structural adhesive film faces away from the at least one surface of the magnet;
(II) Inserting the magnet having the structural adhesive film on at least one of its surfaces into a bracket of a device such that the structural adhesive films is in contact with both at least one surface of the bracket of the device and the at least one surface of the magnet;
(III) Curing the structural adhesive film, thereby bonding the magnet to the bracket of the device.

9. The method according to claim 8, wherein the structural adhesive film is applied to the magnet such that the complete surface of the magnet is covered by the structural adhesive film.

10. The method according to claim 8 or claim 9, wherein application of the structural adhesive film in step (I) is carried out by automatic or robotic equipment.

11. The method according to any one of claims 8 to 10, wherein curing of the structural adhesive film in step (III) comprises heating, preferably to a temperature of at least 100 °C, preferably at least 120 °C, more preferably 140 °C.

12. The method according to any one of claims 8 to 11, wherein the magnet is magnetized during step (III), wherein step (III) comprises heating to a temperature in the range of from 140 to 220 °C, thereby magnetizing the magnet and curing the structural adhesive film.

13. The method according to any one of claims 8 to 12, wherein the device is a rotor or stator of an electric engine or an electric power generator.

14. A bonded assembly, comprising a magnet adhesively bonded to or into a device with the structural adhesive film according to any one of claims 1 to 7.

15. Use of the structural adhesive film according to any one of claims 1 to 7 for adhesively bonding magnets.
